# EUROPÄISCHE PATENTSCHRIFT

(11) **EP 1 928 576 B1**
(45) Veröffentlichungstag und Bekanntmachung des Hinweises auf die Patenterteilung: **19.01.2011**
(21) Anmeldenummer: 06793303.6
(22) Anmeldetag: 07.09.2006
(51) Int. Cl.: B01D 46/24, F01N 3/022

(54) **FILTERELEMENT UND RUSSFILTER MIT VERBESSERTER THERMOSCHOCKBESTÄNDIGKEIT**
FILTER ELEMENT AND SOOT FILTER WITH IMPROVED THERMAL SHOCK RESISTANCE
ELEMENT FILTRE ET FILTRE A PARTICULES A RESISTANCE AMELIOREE AUX CHOCS THERMIQUES

(30) Priorität: 21.09.2005 DE 102005045015
(43) Veröffentlichungstag der Anmeldung: 11.06.2008
(73) Patentinhaber: ROBERT BOSCH GMBH, 70442 Stuttgart (DE)
(72) Erfinder: REINSCH, Bernd, 71642 Ludwigsburg (DE); KOMORI, Teruo, 70378 Stuttgart (DE); THUENER, Lars, 70499 Stuttgart (DE)
(86) Internationale Anmeldenummer: PCT/EP2006/066105
(87) Internationale Veröffentlichungsnummer: WO 2007/033908

(56) Entgegenhaltungen:
- EP-A1- 1 416 132
- EP-A2- 0 285 362
- EP-A2- 1 293 241
- EP-A2- 1 580 181
- JP-A- 5 118 211
- JP-A- 2003 126 629
- US-A- 5 863 508
- US-A1- 2004 071 932

## Beschreibung

### Stand der Technik

Die Erfindung betrifft ein Filterelement zur Reinigung der Abgase einer Brennkraftmaschine nach dem Oberbegriff des Anspruchs 1 und einen Rußfilter mit einem Filterelement nach dem nebengeordneten Anspruch 5. Derartige Filterelemente sind beispielsweise aus JP 2003 12669 A, JP05 118211 A, US 2004/071932 A1 und EP1 293241 A2 und werden beispielsweise als Rußfilter für Dieselbrennkraftmaschinen eingesetzt.

Die Filterelemente bestehen häufig aus einem keramischen Werkstoff und weisen eine Vielzahl von parallel zueinander verlaufenden Eintrittskanälen und Austrittskanälen auf.

Hergestellt werden Filterelemente aus keramischen Werkstoffen durch Extrudieren. Dies bedeutet, dass der Rohling des Filterelements ein prismatischer Körper mit einer Vielzahl von parallel zueinander verlaufenden Kanälen ist. Die Kanäle eines Rohlings sind zunächst an beiden Enden offen.

Damit das zu reinigende Abgas durch die Wände des Filters strömt, wird ein Teil der Kanäle am hinteren Ende des Filterelements verschlossen, während ein anderer Teil der Kanäle am vorderen Ende des Filterelements verschlossen wird. Dadurch werden zwei Gruppen von Kanälen gebildet, nämlich die sogenannten Eintrittskanäle, welche am hinteren Ende verschlossen sind und die sogenannten Austrittskanäle, welche am Anfang des Filterelements verschlossen sind.

Zwischen den Eintrittskanälen und den Austrittskanälen besteht nur über die porösen Wände des Filterelements eine Strömungsverbindung, so dass das Abgas das Filterelement nur durchströmen kann, indem es aus den Eintrittskanälen durch die Wände des Filterelements hindurch in die Austrittskanäle strömt.

Um einen möglichst effektiven Betrieb des Filterelements zu gewährleisten, wird eine möglichst gleichmäßige Temperaturverteilung über den Querschnitt des Filterelements während des Betriebs der Brennkraftmaschine angestrebt.

Der Erfindung liegt die Aufgabe zugrunde, ein Filterelement für einen Rußfilter und einen Rußfilter bereitzustellen, bei denen die Temperaturverteilung über den Querschnitt des Filterelements verbessert und infolgedessen das Betriebsverhalten des mit einem erfindungsgemäßen Filterelement ausgerüsteten Rußfilters ebenso wie dessen Lebensdauer verlängert wird.

Diese Aufgabe wird erfindungsgemäß bei einem Filterelement zur Filterung von Ruß, insbesondere zur Filterung von Abgasen einer Dieselbrennkraftmaschine, mit einer parallel zur Hauptströmungsrichtung des Abgases verlaufenden Längsachse, mit einer Vielzahl von parallel zur Längsachse verlaufenden Einlasskanälen und mit einer Vielzahl von parallel zur Längsachse verlaufenden Auslasskanälen, wobei die Einlasskanäle an einer Eintrittsfläche des Filterelements beginnen und an einer Austrittsfläche des Filterelements verschlossen sind, wobei die Auslasskanäle an der Eintrittsfläche verschlossen sind und an der Austrittsfläche enden, und wobei die außen an dem Filterelement angeordneten Kanäle als Blindkanäle an beiden Enden verschlossen sind, dadurch gelöst, dass innerhalb der dem weitesten innen angeordneten Lage von Blindkanälen eine Lage von Austrittskanälen angeordnet ist.

### Vorteile der Erfindung

Durch die an beiden Enden verschlossenen Blindkanäle an der Außenfläche des Filterelements wird die Temperaturverteilung innerhalb des erfindungsgemäßen Filterelements verbessert. Diese Blindkanäle werden, da sie beidseitig verschlossen sind, nicht von dem Abgas durchströmt. Im Inneren dieser Kanäle befindet sich Luft, welche als Wärmedämmung dient. Dadurch wird die Wärmeabgabe des Filterelements an seiner zylindrischen beziehungsweise prismatischen Außenfläche stark verringert. In Folge dessen verringert sich auch der Temperaturabfall an der Peripherie des Filterelements stark, so dass die Temperaturverteilung innerhalb des Filterelements verbessert wird. Außerdem verkürzt sich die Aufheizzeit des erfindungsgemäßen Filterelements.

Es hat sich als vorteilhaft erwiesen, wenn bis zu fünf Lagen, bevorzugt bis zu drei Lagen von Blindkanälen, außen an dem Filterelement angeordnet werden. Dadurch wird die Wärmeabgabe nach außen weiter verringert und das Temperaturprofil weiter vergleichmäßigt.

Um die Temperaturverteilung weiter zu verbessern, wird erfindungsgemäß vorgeschlagen, dass im Inneren der Lage oder den Lagen von Blindkanälen eine Lage von Austrittskanälen angeordnet wird.

In weiterer vorteilhafter Ausgestaltung der Erfindung ist vorgesehen, dass die radialen Wände zwischen zwei benachbarten Kanälen versetzt zueinander angeordnet sind. Dadurch wird das erfindungsgemäße Filterelement in radialer Richtung flexibler beziehungsweise die Wärmespannungen in radialer Richtung werden reduziert. Dies verbessert die Beständigkeit des erfindungsgemäßen Filterelements gegenüber schnellen Temperaturwechseln, die andernfalls möglicherweise zu Rissen und damit zum Versagen des Filterelements führen können.

Es hat sich weiter als vorteilhaft erwiesen, wenn das Filterelement rotationssymmetrisch oder zentralsymmetrisch bezüglich seiner Längsachse ist.

Die eingangs genannten Vorteile können auch mit einem Rußfilter mit einem Filterelement, mit einem Gehäuse, mit einer Zuleitung, mit einer Ableitung, mit einer die Zuleitung mit dem Gehäuse verbindenden Diffusor und mit einem das Gehäuse mit der Ableitung verbindenden Konus dadurch gelöst werden, dass ein erfindungsgemäßes Filterelement eingesetzt wird.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen genannten Vorteile können sowohl Einzeln als auch in beliebiger Kombination miteinander erfindungswesentlich sein.

### Zeichnungen

Es zeigen:
- Figur 1: einen Rußfilter mit einem erfindungsgemäßen Filterelement in einer Seitenansicht und
- Figur 2: ein erfindungsgemäßes Filterelement in einer Ansicht von vorne.

### Beschreibung der Ausführungsbeispiele

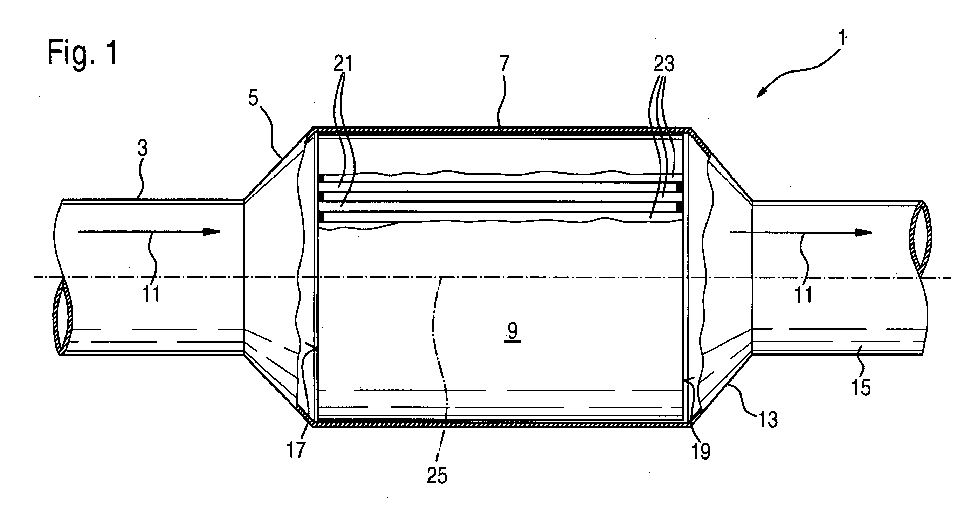

Figur 1 stellt einen Rußfilter 1 mit einer Zuleitung 3, einem Diffusor 5, einem Gehäuse 7 und einem erfindungsgemäßen Filterelement 9 in einer teilweise geschnittenen Seitenansicht dar.

Durchströmt wird der Rußfilter 1 in Richtung der Pfeile 11. An das Gehäuse 7 schließen ein Konus 13 und eine Ableitung 15 an. Das Filterelement 9 ist gasdicht mit dem Gehäuse verbunden, so dass das durch die Zuleitung 3 zuströmende Abgas (nicht dargestellt) durch das Filterelement 9 hindurchströmen muss.

Das Filterelement 9 weist eine Eintrittsfläche 17 und eine Austrittsfläche 19 auf. Das Filterelement 19 ist von einer Vielzahl von Kanälen durchzogen, die sich von der Eintrittsfläche 17 bis zur Austrittsfläche 19 erstrecken.

Damit das Abgas durch die Wände (ohne Bezugszeichen) des Filterelements 9 strömen muss, sind die Eintrittskanäle 21 an der Eintrittsfläche 17 offen und an der Austrittsfläche 19 verschlossen. Die sogenannten Austrittskanäle 23 sind an der Eintrittsfläche 17 verschlossen und an der Austrittsfläche 19 offen. Die Verschlüsse der Eintrittskanäle 21 und der Austrittskanäle 23 sind in Figur 1 als schwarze Flächen ohne Bezugszeichen dargestellt.

Das in Figur 1 in einem Teilschnitt dargestellte Muster von jeweils einem Eintrittskanal 21, der sich mit einem Austrittskanal 23 abwechselt, setzt sich über die gesamte Querschnittsfläche des Filterelements in an sich bekannter Weise fort.

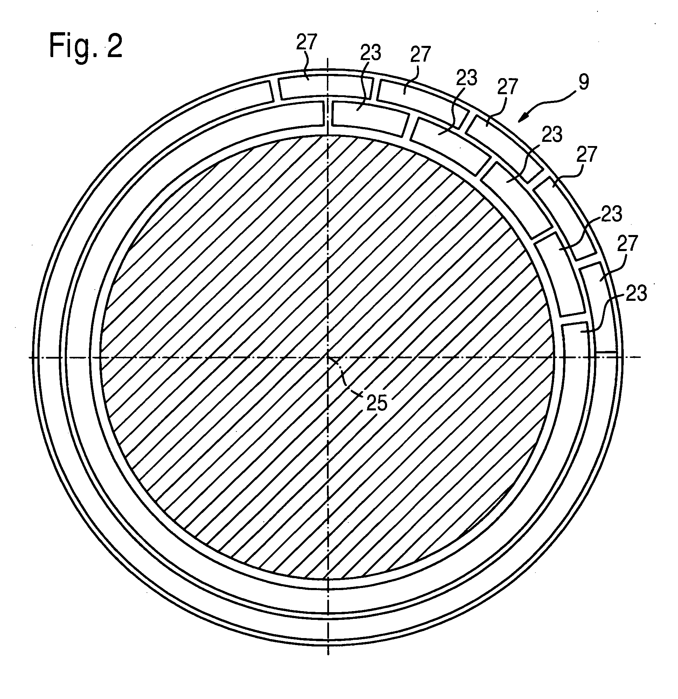

Figur 2 zeigt einen Querschnitt durch ein Ausführungsbeispiel eines erfindungsgemäßen Filterelements 9.

Das in Figur 2 dargestellte Ausführungsbeispiel hat einen kreisrunden Querschnitt und ist zentralsymmetrisch bezüglich der Längsachse 25. Innerhalb der schraffiert dargestellten Fläche im Inneren des Filterelements 9 sind Eintrittskanäle 21 und Austrittskanäle 23 (siehe Figur 1) im Wechsel in der aus dem Stand der Technik bekannten Weise angeordnet. Aus Gründen der Übersichtlichkeit wurde darauf verzichtet, alle Kanäle 21 und 23 in Figur 2 einzuzeichnen.

Am Außendurchmesser des Filterelements 9 ist bei dem Ausführungsbeispiel gemäß Figur 2 eine Lage von Blindkanälen 27 angeordnet. Ebenfalls aus Gründen der Übersichtlichkeit sind nur einige Blindkanäle 27 exemplarisch dargestellt und zwar über einen Umfangswinkel von etwa 90° im ersten Quadranten. Es versteht sich jedoch von selbst, dass auch in den übrigen Quadranten ebenfalls Blindkanäle 27 vorgesehen sind.

Die Lage von Blindkanälen 27 dient als Wärmedämmung gegenüber der Umgebung, da Luft ein schlechter Wärmeleiter ist. Durch den an der Peripherie des Filterelements 9 vorhandenen Mantel aus Blindkanälen 27 wird die Wärmeabfuhr nach außen reduziert und eine Temperaturanhebung im Außenbereich des Filterelements 9 bewirkt. Dies führt führt zu der bereits beschriebenen Vergleichmäßigung des Temperaturprofils über den Querschnitt des Filterelements 9.

Es können auch mehrere konzentrisch zueinander angeordnete Lagen (nicht dargestellt) von Blindkanälen 27 vorgesehen werden, um die Wärmedämmung und in Folge dessen auch das Temperaturprofil innerhalb des Filterelements 9 weiter zu verbessern.

Bei dem in Figur 2 dargestellten Ausführungsbeispiel ist erfindungsgemäß zwischen der Lage von Blindkanälen 27 und der schraffierten Fläche eine Lage von Austrittskanälen 23 angeordnet. Dadurch ergeben sich die Vorteile hinsichtlich Betriebsverhalten und Lebensdauer des erfindungsgemäßen Filterelements 9.

Die Blindkanäle 27 können einen anderen Querschnitt als die Eintrittskanäle 21 oder die Austrittskanäle 23 haben. Es kann jedoch auch vorteilhaft sein, wenn alle Kanäle 21, 23, und 27 den gleichen Querschnitt haben.

Es versteht sich von selbst, dass die erfindungsgemäße Anordnung nicht auf zylindrische Filterelemente 9 beschränkt ist, sondern beispielsweise auch auf Filterelemente 9 übertragbar ist, die einen quadratischen oder rechteckigen Querschnitt haben. Auch die Eintrittskanäle 21, die Austrittskanäle 23 und/oder die Blindkanäle 27 können andere Formen haben, beispielsweise sechseckige oder kreuzförmige Formen .

## Patentansprüche

1. Filterelement zur Filterung von Russ, insbesondere zur Filterung von Abgasen einer Dieselbrennkraftmaschine, mit einer parallel zur Hauptströmungsrichtung des Abgases verlaufenden Längsachse (15), mit einer Vielzahl von parallel zur Längsachse (15) verlaufenden Einlasskanälen (21), und mit einer Vielzahl von parallel zur Längsachse (25) verlaufenden Auslasskanälen (23), wobei die Einlasskanäle (21) an einer Eintrittsfläche (17) des Filterelements (9) beginnen und an einer Austrittsfläche (19) des Filterelements (9) verschlossen sind, und wobei die Auslasskanäle (23) an der Eintrittsfläche (17) verschlossen sind und an der Austrittsfläche (19) enden, und wobei die außen an dem Filterelement (9) angeordneten Kanäle als Blindkanäle (27) an beiden Enden verschlossen sind, **dadurch gekennzeichnet, dass** innerhalb der am weitesten innen angeordneten Lage von Blindkanälen (27) eine Lage von Austrittskanälen (23) angeordnet ist.

2. Filterelement nach Anspruch 1, **dadurch gekennzeichnet, dass** am Außendurchmesser des Filterelements 0 bis zu fünf Lagen von beidseitig verschlossenen Blindkanälen (27), bevorzugt eine bis drei Lagen von beidseitig verschlossenen Blindkanälen (27), vorgesehen sind.

3. Filterelement nach einem der vorhergehenden Ansprüche, **dadurch gekennzeichnet, dass** die radial verlaufenden Wände zwischen zwei benachbarten Kanälen(21, 23) und/oder Blindkanälen (27) versetzt zueinander angeordnet sind.

4. Filterelement nach einem der vorhergehenden Ansprüche, **dadurch gekennzeichnet, dass** das Filterelement (9) rotationssymmetrisch oder zentralsymmetrisch bezüglich seiner Längsachse (25) ist.

5. Rußfilter mit einem Filterelement (9), mit einem Gehäuse (7), mit einer Zuleitung (3), mit einer Ableitung, mit einem die Zuleitung (3) mit dem Gehäuse (7) verbindenden Diffusor (5) und mit einem das Gehäuse (7) mit der Ableitung verbindenden Konus (13), **dadurch gekennzeichnet, dass** das Filterelement ein Filterelement (9) nach einem der vorhergehenden Ansprüche ist.

## Claims

1. Filter element for filtering soot, in particular for filtering exhaust gases of a diesel engine, having a longitudinal axis (15) which runs parallel to the main flow direction of the exhaust gas, having a multiplicity of inlet ducts (21) which run parallel to the longitudinal axis (15), and having a multiplicity of outlet ducts (23) which run parallel to the longitudinal axis (25), with the inlet ducts (21) beginning at an inlet surface (17) of the filter element (9) and being closed off at an outlet surface (19) of the filter element (9), and with the outlet ducts (23) being closed off at the inlet surface (17) and ending at the outlet surface (19), and with the ducts arranged at the outside on the filter element (9) being closed off at both ends as blind ducts (27), **characterized in that** a layer of outlet ducts (23) is arranged within the innermostly-arranged layer of blind ducts (27).

2. Filter element according to Claim 1, **characterized in that** up to five layers of blind ducts (27) closed off at both sides, preferably one to three layers of blind ducts (27) closed off at both sides, are provided on the outer diameter of the filter element (9).

3. Filter element according to one of the preceding claims, **characterized in that** the radially running walls between two adjacent ducts (21, 23) and/or blind ducts (27) are arranged offset with respect to one another.

4. Filter element according to one of the preceding claims, **characterized in that** the filter element (9) is rotationally symmetrical or centrally symmetrical with respect to its longitudinal axis (25).

5. Soot filter having a filter element (9), having a housing (7), having an inlet line (3), having an outlet line, having a diffuser (5) which connects the inlet line (3) to the housing (7), and having a cone (13) which connects the housing (7) to the outlet line, **characterized in that** the filter element is a filter element (9) according to one of the preceding claims.

## Revendications

1. Elément de filtration destiné à filtrer des suies, en particulier à filtrer les gaz d'échappement d'un moteur à combustion interne diesel, et présentant
un axe longitudinal (15) qui s'étend parallèlement à la direction principale d'écoulement des gaz d'échappement,
plusieurs canaux d'entrée (21) qui s'étendent parallèlement à l'axe longitudinal (15) et plusieurs canaux de sortie (23) qui s'étendent parallèlement à l'axe longitudinal (25),
les canaux d'entrée (21) commençant sur une surface d'entrée (17) de l'élément de filtration (9) et étant fermés sur une surface de sortie (19) de l'élément de filtration (9),
les canaux de sortie (23) étant fermés sur la surface d'entrée (17) et se terminant sur la surface de sortie (19),
des canaux aveugles (27) disposés à l'extérieur sur l'élément de filtration (9) étant fermés aux deux extrémités,
**caractérisé en ce que**
une couche de canaux de sortie (23) est disposée à l'intérieur de la couche de canaux aveugles (27) disposée le plus à l'intérieur.

2. Elément de filtration selon la revendication 1, **caractérisé en ce que** jusqu'à cinq couches de canaux aveugles (27) fermés des deux côtés et de préférence de une à trois couches de canaux aveugles (27) fermés des deux côtés sont prévues sur le diamètre extérieur de l'élément de filtration (9).

3. Elément de filtration selon l'une des revendications précédentes, **caractérisé en ce que** les parois qui s'étendent radialement sont disposées en décalage mutuel entre deux canaux (21, 23) voisins et/ou deux canaux aveugles (27) voisins.

4. Elément de filtration selon l'une des revendications précédentes, **caractérisé en ce que** l'élément de filtration (9) présente une symétrie de rotation ou une symétrie centrale par rapport à son axe longitudinal (25).

5. Filtre à suies doté d'un élément de filtration (9) qui présente un boîtier (7), une amenée (3), une évacuation, un diffuseur (5) qui relie l'amenée (3) au boîtier (7) et un cône (13) qui relie le boîtier (7) à l'évacuation,
**caractérisé en ce que**
l'élément de filtration est un élément de filtration (9) selon l'une des revendications précédentes.
